# EUROPEAN PATENT SPECIFICATION

(11) **EP 3 882 393 B1**
(45) Date of publication and mention of the grant of the patent: **04.09.2024**
(21) Application number: 20186306.5
(22) Date of filing: 16.07.2020
(51) Int. Cl.: D06H 3/08, G01N 21/898, B07C 5/342

(54) **DEVICE AND METHOD FOR THE ANALYSIS OF TEXTILES**
VORRICHTUNG UND VERFAHREN ZUR ANALYSE VON TEXTILIEN
DISPOSITIF ET PROCÉDÉ POUR L'ANALYSE DE TEXTILES

(30) Priority: 17.03.2020 EP 20163781
(43) Date of publication of application: 22.09.2021
(73) Proprietor: Fraunhofer-Gesellschaft zur Förderung der angewandten Forschung e.V., 80686 München (DE)
(72) Inventor: Siegmund, Dirk, 63225 Langen (DE); Yeste Magdaleno, Javier, 64293 Darmstadt (DE)
(74) Representative: Patentanwälte Bressel und Partner mbB

(56) References cited:
- EP-A1- 3 401 411
- WO-A1-2019/150243
- DE-A1- 3 639 636
- US-A- 5 377 279
- US-A1- 2019 291 141

## Description

The invention relates to a method and a device for the analysis of textiles.

The sorting of textiles or fabrics according to defects or product categories plays an important role for companies operating in textile cleaning, textile recycling or returns handling. Sorting used textiles according to defects or quality standards is price relevant. A defect can occur in the case in which the regular structure of the material surface is disturbed, e.g. through holes, cuts or stains. There are about 70 different types of defects in the literature.

It is known to use automation processes for textile sorting and washing. However, the sorting and quality assurance of textiles is mostly carried out manually. The textiles are often transported in voluminous shape on a conveyor belt and visually inspected by an employee.

Depending on the result of the inspection, the textiles are sorted into different categories. Detecting defects with manual control is difficult and expensive.

Known are automated methods for the image-based detection of defects on textiles that are spread out, but these produce low detection rates when used on non-spread out textiles. Spreading out of a textile, in particular a mechanical spreading, decreases the time of inspection and also the quality of inspection. Difficulties affecting the image-based classification of textiles in general occur if
1. textiles are in motion
2. at least half of the surface is covered, since the textile is classified horizontally
3. folds and shadows dynamically change parts of the surface
4. textiles deform freely
5. different patterns make the detection of defects difficult, in particular if a defect is a wanted defect.

Also known are methods which deal with the error detection in 2-D images of statically arranged textiles. However, these methods only partially solve the problem because:
a) textiles must not move,
b) large parts of a lying textile are not considered (because they lie below on a non-imaged side of the textile),
c) the detection performance of deformable surfaces, such as textiles, (in particular for reasons mentioned under 1. to 5. above) is too poor.

The document Siegmund D., Prajapati A., Kirchbuchner F., Kuijper A. (2018) An Integrated Deep Neural Network for Defect Detection in Dynamic Textile Textures. In: Hernández Heredia Y., Milián Núñez V., Ruiz Shulcloper J. (eds) Progress in Artificial Intelligence and Pattern Recognition. IWAIPR 2018. Lecture Notes in Computer Science, vol 11047. Springer, Cham discloses a system in which computer vision and machine learning can be used to automatically detect the defect detection of defects in textiles. For this purpose, a solution is presented that carries out classification and localization through neural networks and transfer learning. The teaching in this document, however, is only related to a textile which is spread out on a conveyor belt.

EP 2874761 A1 discloses machines for continuous inspection as well as machines for continuous sorting of a stream of products, such as bulk products, which are transported past an inspection unit in a single layer, these products preferably being inspected for their optical properties.

DE 19633326 A1 discloses the taking of successive images of workpieces to be controlled using an electronic image taking unit.

EP 1570255 A1 discloses a method for identifying defects in a textile structure, whereby signals are derived from the textile structure and are processed at least with pre-determined parameters.

The US 2019/291141 A1 discloses an LIBS-type object sorting device that sorts an object with LIBS analysis, and particularly relates to an LIBS-type object sorting device that performs LIES analysis on an object to be sorted while conveying the object to be sorted with a conveyor and sorts the object to be sorted on the basis of the LIBS analysis.

The EP 3 401 411 A1 discloses a method for (automatic) fault location detection in limp bodies, namely in particular in animal or leather hides.

The WO 2019/150243 A1 discloses arrangements for imaging of a manufactured web using a plurality of image capturing devices, (e.g., cameras), wherein the image data that that is captured by the plurality of image capturing devices is combined to form a"virtual camera data array" including image data from each of the plurality of image capturing devices spatially synchronized to the specific physical locations of the web where each image capturing device imaged the web.

US 5,377,279 A discloses a method for displaying a defect and an apparatus therefor.

There is the technical problem of providing a device and method for the analysis of textiles which allow a fast and reliable determination of at least one textile characteristic and/or at least defect and/or at least one defect characteristic.

The solution to said technical problem is provided by the subject-matter with the features of the independent claims. Further advantageous embodiments are provided by the subject-matter with the features of the sub claims.

A device for the analysis of at least one textile is proposed. The device comprises at least one control unit, at least one imaging unit and at least one evaluation unit. The control unit and the evaluation unit can be provided by separate units or by a common unit. Further, the control unit and the evaluation unit can be provided by or comprise at least one microprocessor or an integrated circuit, e.g. a FPGA. The imaging unit can be a camera, e.g. a CMOS- or CCD camera.

The device further has or provides at least one supply section for supplying the textile into an imaging section. The supply section can be provided by or comprise at least one funnel. The device further has or provides at least one imaging section for imaging a textile arranged in the imaging section. The imaging section can be provided by an inner volume of a cylindric element. The cylindric element can have a circular footprint or base area. It is, however, also possible that the cylindric element has a polygonal footprint, e.g. a triangular or a rectangular or an octagonal footprint.

An exit opening of the funnel can e.g. be opened towards this inner volume. The funnel can have an input opening and the exit opening, wherein a diameter of the exit opening is smaller than the diameter of the input opening. The textile can be fed into the funnel through the input opening and transported to the imaging section by passing the exit opening.

An inner surface of a wall element enclosing the imaging section can be single-coloured. In particular, said inner surface should be a non-patterned, homogenous surface. The inner surface can e.g. be a metallic surface or a white surface. It is e.g. possible to provide the surface by a coloured, e.g. white, adhesive foil which is attached to a base structure of the wall element.

It is possible that device is designed such that the textile is transported through the supply section into and through the imaging section along a transport trajectory. The trajectory can be a straight line, at least in the imaging section. It is e.g. possible that the transport trajectory is parallel or collinear to the central (longitudinal) axis of the imaging section.

Further, at least one image of the textile is generable by means of the imaging unit if the textile is in the imaging section.

Further, at least one textile characteristic and/or at least defect and/or at least one defect characteristic is determinable by means of the evaluation unit based on the at least one image.

Further, the device comprises at least one position detection unit for detecting a position of the textile in the supply section and/or in the imaging section. According to the invention, the image generation by the at least one imaging unit is controlled by means of the control unit based on the detected position, wherein the time point of the image generation is controlled based on the detected position. The at least one imaging unit for generating at least one image of the textile is not part of the position detection unit. In other words, the position can be detected without generating and/or evaluating the image(s) generated by the at least one imaging unit.

The position detection unit can be an object detection unit which detects the presence of an object. For example, an object detection unit can be or comprise an optical sensor, in particular a photoelectric sensor, an image sensor, an ultrasonic sensor or a mechanical sensor, e.g. a switch. It is also possible that the sensor is an inductive or capacitive sensor. The sensor of the object detection unit can be different from the image sensor of the imaging unit. In this case, it is possible to control the time point of the image generation based on the point in time at which the object is detected. It is e.g. possible that the time point of the image generation is equal to the point in time at which the object is detected or follows said point in time by a predetermined time offset. In case the image sensor of the object detection unit is also a sensor of the imaging unit, object detection can be performed by using an algorithmic change detection performed using an image-series of at least two images captured by the sensor.

Controlling the image generation based on the position of the textile advantageously allows a reliable imaging of a fast moving textile which leads to a fast and reliable determination of at least one textile characteristic and/or at least defect and/or at least one defect characteristic based on the generated image(s).

In another embodiment, the device is designed such that a transport direction of the at least one textile through the imaging section is fully or at least partially parallel to a direction of the gravitational force, in particular fully or at least partially oriented in the same direction as the gravitational force. A direction opposite to the direction of the gravitational force can be denoted as vertical direction.

In other words, the device is designed such that the transport of the textile through the imaging section is provided by a free fall motion. In this case, a central axis of the supply section, in particular the funnel, and the central axis of the imaging section can be oriented parallel to the direction of the gravitational force. This allows a fast transport of the textile without any further energy consumption for the transport and consequently to a fast imaging which again leads to a fast and reliable determination of at least one textile characteristic and/or at least defect and/or at least one defect characteristic based on the generated image(s).

In another embodiment, the device comprises at least one light source for illuminating the imaging section at least partially, in particular fully. The device can comprise exactly one single light source. Preferably, the device comprises multiple light sources. The number of light sources can be equal to the number of imaging units. Multiple light sources can be arranged such that the illuminating the textile in the imaging section from different positions and/or with different orientations.

A light source can be designed as ring light. Such a light source can be arranged such that the image captured by one imaging unit is capturable through a through hole provided by the ring light. Alternatively, the imaging unit or at least a part thereof is arranged in the volume of the through hole provided by the ring light. If the device comprises multiple imaging units and multiple ring lights, each of the imaging units of the device or selected imaging units of a set of more than one imaging unit can be arranged in a volume of a through hole provided by one of the ring lights or can capture an image through said through hole.

A ring light can have a rectangular, in particular quadratic, shape. This is, however, not mandatory. A ring light can also have a circular or oval shape or any other kind of shape. The shape can be selected depending on the size and design of the imaging section.

A light source can be designed such that diffuse light is generated by the light source. An intensity of the light is selected depending on the size of the imaging section and/or the distance between light source and the textile within the imaging section. The intensity has to be selected such that an image with sufficient quality can be generated in case the textile moves with a high velocity, in particular a velocity higher than a predetermined threshold value.

It is further possible that multiple imaging units, e.g. two or more than two imaging units, are equiangularly arranged along a path, in particular a closed path, around the transport trajectory of the textile.

The path can e.g. be arranged in a plane which is oriented perpendicular to the orientation of the transport trajectory in the point of intersection of the plane and the transport trajectory. This point of intersection can be the centre point of the path which is, however, not a mandatory feature. The path can have a circular or polygonal shape. In particular, the path can have the same shape as the footprint of the cylindrical element.

An equiangular arrangement can denote an arrangement in which for each set of two neighbouring imaging units along the path, the angle between a first line connecting the centre of the path and the position of a first imaging unit of said set on the path and a second line connecting the centre of the path and the position of a second imaging unit of said set on the path is equal.

Correspondingly, multiple light sources, e.g. two or more than two light sources, can be equiangularly arranged along a path around the transport trajectory of the textile.

The path along which the imaging units are arranged can be equal to the path along which the light sources are arranged. The paths, however, can also be different. In particular, the paths can be arranged with an offset relative to each other along the transport trajectory.

Further, an angular position of an imaging unit can be equal to an angular position of a light source, in particular if the light source is provided as a ring light. The angular position can be measured in a common reference polar or cylindrical coordinate system with its origin in the centre of the path.

It is, however, also possible that an angular position of an imaging unit can be different from an angular position of a light source. It is e.g. possible that a light source is arranged with an angular offset relative to the preceding or adjacent imaging unit along the same path or along different paths projected to a common projection path. The common projection path can e.g. be arranged in a projection plane which is oriented perpendicular to the transport trajectory. It is e.g. possible that an alternating arrangement of imaging units and light sources is provided along the same path or the common projection path. It is also possible that the imaging units and light sources are equiangularly arranged along the same path or the common projection path. In this case, an angle between an imaging unit and the neighbouring light source along the same or the common projection path can be half of the angle between an imaging unit and the neighbouring imaging unit along the same or the common projection path.

In general, the at least one light source should be arranged and/or designed such that the textile can be fully illuminated.

The light source(s) can be constant illumination mode. Alternatively, the light source(s) can be operated in a flash mode. It is e.g. possible to activate a light source based on the detected position, e.g. a predetermined time interval before an image is generated or simultaneously to the image generation.

In another embodiment, the device comprises multiple imaging units for imaging the textile in the imaging section from a different position and/or with different orientations. It is possible that optical axes of different imaging units have different orientations but are oriented in the same plane. It is further possible that the optical axes of different imaging units are oriented towards the central axis of the imaging section or to the transport trajectory. It is further possible that the optical axes of differing imaging units intersect said central axis of the imaging section or intersect the transport trajectory, in particular in one common point.

Having multiple imaging units advantageously allows to increase the reliability that all relevant sections of the textile are imaged. In particular, the probability that certain areas of the textile are covered on all images (and thus cannot be examined for characteristics or defects) is minimized. This, in turn, increases the reliability of the determination of at least one textile characteristic and/or at least defect and/or at least one defect characteristic based on the generated image(s).

In case of multiple light sources, it is possible that an illumination direction of different light sources have different orientations but are arranged in the same plane. It is further possible that the illumination direction of different light sources are oriented towards the central axis of the imaging section or to the transport trajectory. It is further possible that the illumination directions of different light sources intersect said central axis of the imaging section or intersect the transport trajectory, in particular one common point. An orientation of an illumination direction of a light source can be equal to the orientation of an optical axis of an imaging unit. It is, however, also possible that an orientation of an illumination direction of a light source is different from the orientation of an optical axis of an imaging unit.

In a further embodiment, the device comprises multiple position detection units for detecting different positions of the textile in the supply section and/or in the imaging section, wherein the image generation by the at least one imaging unit is controllable by means of the control unit based on positions detected by the multiple position detection units. It is further possible to control an operation of the at least one light source, e.g. by means of the control unit, based on positions detected by the multiple position detection units.

It is e.g. possible that an image is generated by all or a first set of selected but not all imaging units if a first position of the textile is detected. Further, an(other) image is generated by all or a second set of selected but not all imaging units if a second position of the textile is detected. The first and the second set can comprise different imaging units. It is possible that a set comprises only one single imaging unit. It is, of course, possible to generated one or more images at further positions of the textile. This allows to reliably image the textile even in the case that the speed of the movement of the textile through the imaging section varies which is usually the case for deformable textiles in a free fall scenario since the falling speed is variable due to the continuously changing shape of the textile. This again increases the reliability of the determination of at least one textile characteristic and/or at least defect and/or at least one defect characteristic based on the generated image(s).

Correspondingly, it is possible that a first set of light sources is activated if a first position of the textile is detected. The first set can comprise one single light source, multiple but not all or all light sources.

Further, a further set of light sources is activated if a second position of the textile is detected. The first and the second set can comprise different light sources.

In another embodiment the multiple position detection units are arranged such that different positions of the textile along the transport trajectory are detectable. It is e.g. possible to arrange position detection units, in particular object detection units, along a line which is parallel to the transport trajectory or to the vertical direction. This further increases the reliability of the determination of at least one textile characteristic and/or at least defect and/or at least one defect characteristic based on the generated image(s) since a reliably image of the textile during the movement along the transport trajectory is made possible even in the case that the speed of the movement of the textile varies during such a movement.

In a further embodiment, a position detection unit comprises an optical sensor, an ultrasonic sensor or a mechanical sensor. This has been explained before and allows a reliable position detection and consequently a reliable imaging of the textile.

In another embodiment, a textile characteristic is a color, a color pattern, a type of textile, a garment or a thread system. A color pattern can e.g. be a logo. A thread system can e.g. be a weaving type, a knitting type or a tufting type of thread system. A type of textile can e.g. be a shirt, a jeans and so on.

It is also possible first determine at least a first textile characteristic, wherein at least one further textile characteristic is determined based on the at least first textile characteristic. For example, one or multiple colors of the textile can be determined, wherein the type of textile is then determined based on the color information.

This advantageously allows a detailed analysis of the textile which can be used to perform characteristic-dependent measures, e.g. a characteristic-dependent sorting of the textile.

In a further embodiment, a defect is a cut, a hole, a stain, the presence of rust or an opened seam. This advantageously allows a detailed analysis of defects which can be used to perform defect-dependent measures, e.g. a defect-dependent sorting of the textile.

In a further embodiment, a characteristic of a defect is a size of the defect. This advantageously allows a detailed analysis of defects which can improve the performance of defect-dependent measures.

In a further embodiment, a depth information of a defect is determined, wherein the size of the defect is determined based on the depth information. The depth information can be determined based on a single image generated by one single imaging unit, based on multiple images generated by one single imaging unit or based on multiple images generated by different imaging units. It is e.g. possible to determine the depth information by a structured light based process. In this case, at least one of the aforementioned light sources can generate the structured light which is required to perform the structured light based process. It is, however, also possible that the device comprises at least one additional light source for generating the structured light which is arranged such that the textile in the imaging section can be illuminated by structured light.

It is, however, also possible to determine the depth information based on a stereoscopic procedure.

In a further embodiment, the depth information is determined based on a single image of one imaging unit. In other words, depth information is extracted from a single image made by a single imaging unit. This advantageously allows an accurate determination of the size which can further improve the performance of defect-dependent measures.

In a further embodiment, the depth information is determinable by using a Neural Network. This advantageously allows a reliable determination of depth information for textiles with different shapes, in particular at the time point of image generation.

In a further embodiment, at least one textile characteristic and/or at least one defect and/or at least one defect characteristic is determinable using a Neural Network. This advantageously allows a reliable determination of depth information for different textiles and/or for different textile with different shapes, in particular at the time point of image generation.

The neural network can e.g. be implemented by means of the evaluation unit. The evaluation unit can thus be configured to perform the described determination by providing the functionality of a neural network. Thus, the determination can be a computer-implemented determination.

In a further embodiment, the device is part of a textile sorting device. The sorting can be performed based on the textile characteristic and/or a defect and/or at least one defect characteristic and/or the depth information. In order to perform the sorting, an image-based classification can be performed which can be based on said textile characteristic and/or at least defect and/or at least one defect characteristic and/or the depth information, wherein the sorting is performed based on the classification result.

It is e.g. possible to identify the type of textile based on colour information and to perform a type-dependent sorting. The skilled person can use known classification proceedings for said classification. It is e.g. possible to use a predetermined assignment of features determined based on an image analysis and the type of textile or any quantity required for the evaluation of a sorting criterion. Using the device as part of a textile sorting device advantageously allows a reliable sorting.

Further described is a device for sorting textile which comprises a device for the analysis of at least one textile according to one of the embodiments disclosed in this disclosure and at least one sorting means, wherein the at least one sorting means is controllable, e.g. by means of the control unit, based on the at least one textile characteristic and/or at least defect and/or at least one defect characteristic.

The evaluation unit can e.g. decide how to proceed with the analyzed textile. Depending on at least one textile characteristic and/or at least defect and/or at least one defect characteristic, the textile can be out-sorted. For this reason, the device can comprise means for pushing the textile into different containers, e.g. pneumatic actors or a physical gate. It is, however, clear to the skilled person that other sorting means can be used.

In other words, the proposed device can basically consist of two units: a recording unit comprising the imaging units and the position detection units and a computing unit. The former takes pictures of the textile with the aid of the position detection units, while the latter then classifies the images with regard to the evaluation metrics mentioned before.

The device can designed to enable the free fall of the textile through the imaging section. The textile can be introduced into the device through a kind of funnel and then fall along at least one imaging unit and the position detection unit and then exit the device again. If there are several imaging units, these can be placed on opposite sides of the imaging section, for example, in order to minimize the area that is not visible to the system.

Before the textile exits the capturing unit, the images can already be sent to the computing unit so that the result of the classification is fixed when the textile exits and the textile can thus be guided accordingly for further processing. The computing unit is represented by a computer with a powerful graphics card or FPGA which inspects the recordings at high speed and then passes the result on to a control system. The control system can then send the textiles, depending on their classification results, to e.g. different containers or further processing.

Further proposed is a method for the analysis of at least one textile, wherein the at least one textile is transported along a transport trajectory through a supply section into an imaging section, wherein a position of the at least one textile in the supply section and/or in the imaging section is detected, wherein at least one image of the at least one textile in the imaging section is generated, wherein the image generation is controlled based on the detected position, wherein at least one textile characteristic and/or at least defect and/or at least one defect characteristic is determined based on the at least one image. As mentioned before, it is further possible to control the operation of at least one light source based on the detected position.

The method can be performed with a device for the analysis of at least one textile according to one of the embodiments disclosed in this disclosure. Also, the device for the analysis of at least one textile can be configured to perform said method.

The proposed method has the following advantages: a high recognition performance, no alignment of the textiles necessary, high recognition speed, size determination of a defect possible.

Further described is a method for sorting textile which comprises a method for the analysis of at least one textile according to one of the embodiments disclosed in this disclosure. Further, at least one sorting means is controllable based on the at least one textile characteristic and/or at least defect and/or at least one defect characteristic. The sorting decision can be made on the basis of predefined rules that can take into account the at least one textile characteristic and/or at least defect and/or at least one defect characteristic and provide a corresponding sorting decision.

The invention is described with respect to the following figures. The figures show:
- Fig. 1: a schematic cross section of a device for the analysis and sorting of at least one textile,
- Fig. 2: a schematic top view of a device for the analysis and sorting of at least one textile,
- Fig. 3a: a schematic arrangement of position detection units with a textile in a first position,
- Fig. 3b: a schematic arrangement of position detection units with a textile in a second position,
- Fig. 3c: a schematic arrangement of position detection units with a textile in a third position,
- Fig. 4: a schematic flow diagram of a method for the analysis of at least one textile
- Fig. 5: a schematic perspective view of a cross section through a device for the analysis and sorting of at least one textile.

In the following, the same reference numerals denote elements with the same or similar technical features.

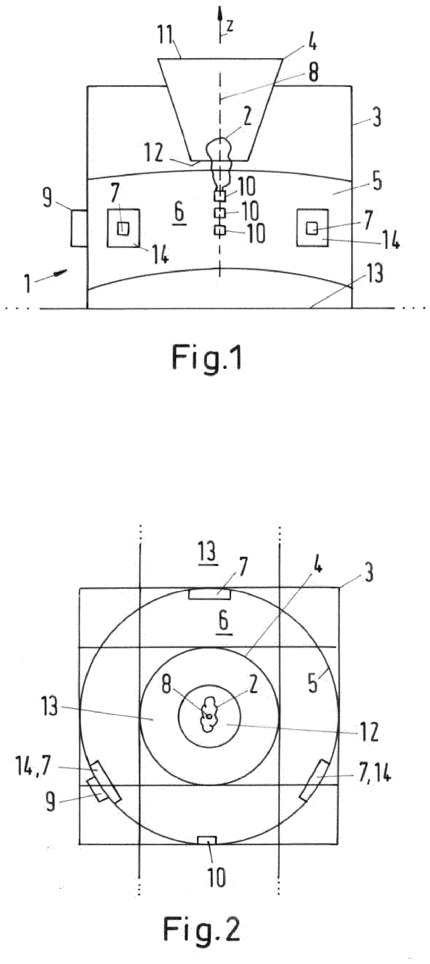

Fig. 1 shows a schematic cross section of a device 1 for the analysis and sorting of at least one textile 2.

The device 1 comprises a frame 3. A funnel 4 and a hollow cylindrical element 5 are mounted to the frame 3. Further shown is a vertical axis z with an arrowhead indicating a vertical direction. This vertical direction is oriented opposite to the direction of a gravitational force.

The funnel 4 is arranged above the hollow cylindrical element 5 along the vertical direction.

The funnel 4 is part of a supply section of the device 1 by which the textile 2 can be supplied to an imaging section 6 which is arranged in the inner volume of the hollow cylindrical element 5. The cylindrical element 5 has a circular shaped footprint. Further shown are imaging units 7 mounted at different positions on the inner wall of the hollow cylindrical element 5. Optical axes of said imaging units 7 which can e.g. be provided by cameras are oriented towards a central axis 8 of the imaging section 6 which is collinear to the central longitudinal axis of the funnel 4 and the central longitudinal axis of the hollow cylindrical element 5. Further shown are light sources 14 which are designed as ring lights, in particular ring lights with a rectangular shape. Each imaging unit 7 is surrounded by such a light source 14 which means that the imaging unit 7 is arranged within the volume of the through hole provided by the ring light. Illumination directions of said light sources 14 are also oriented towards said central axis 8 of the imaging section 6.

It is further shown that the imaging units 7 are equiangularly arranged along a circular path around the central axis 8 which is parallel or collinear to the transport trajectory of the textile 2, wherein the circular path extends along the inner surface of the hollow cylindrical element 5 and is arranged in a plane which is oriented perpendicular to the central axis 8 in the point of intersection of the plane and the central axis 8. An angle between two adjacent or neighbouring imaging units 7 along the circular path is equal to 120°.

Correspondingly, the light sources 14 are arranged equiangularly along said circular path.

Further, the angular position of an imaging unit 7 is equal to the angular position of the light source 14 surrounding the imaging unit 7 in a common reference polar or cylindrical coordinate system around the centre of the circular path.

Further shown is an evaluation and control unit 9 which is also attached to the frame 3. It is, however, also possible the evaluation and control unit 9 is arranged remote from the frame 3. Further shown are position detection units 10 which are also mounted at different positions on the inner wall of the hollow cylindrical element 5. It is shown that the position detection units 10 are arranged adjacent to one another along a line which is parallel to the vertical axis z. The position detection units 10 can be provided by or comprise object detection sensors.

If a textile 2 is supplied through an input opening 11 into the funnel 4, its movement is driven by the gravitational force and it is guided towards the central longitudinal axis of the funnel 4 and the central longitudinal axis of the hollow cylindrical element 5. The textile 2 exits the funnel 4 through an exit opening 12 of the funnel 4 and moves in a free fall scenario through the hollow cylindrical element 5 and the imaging section 6.

It is possible that the position detection units 10 as well as the imaging units 7 are connected to the evaluation and control unit 9.

Different positions of the textile 2 during the fall can be detected by the position detection units 10. If a predetermined position of the textile 2 is detected, images can be taken by one, selected but not all or by all imaging units 7. This image generation based on the detected positions can be controlled by the evaluation and control unit 9. It is e.g. possible that an image is taken by all imaging units 7 of a position-specific set of imaging units 7, wherein different position-specific sets of imaging units 7 can comprise different imaging units 7.

If a predetermined position of the textile 2 is detected, it is further possible to activate one, selected but not all or all light sources 14. This illumination based on the detected positions can be controlled by the evaluation and control unit 9. It is e.g. possible that light sources 14 of a position-specific set of light sources 14 are activated, wherein different position-specific sets of light sources 14 can comprise different light sources 14.

Further shown is a transport belt 13 which is arranged below the hollow cylindrical element 5 along the vertical direction.

By means of the evaluation and control unit 9, at least one textile characteristic and/or at least defect and/or at least one defect characteristic can be determined based on the images taken during the fall of the textile 2 through the imaging section 6.

Based on the at least one textile characteristic and/or at least defect and/or at least one defect characteristic, the textile 2 can be sorted. It is e.g. possible to control a direction of the transport belt 13 based on the at least one textile characteristic and/or at least defect and/or at least one defect characteristic, e.g. by means of the evaluation and control unit 9.

Fig. 2 shows a schematic top view of a device 1 for the analysis and sorting of at least one textile 2. It is shown that imaging units 7 and light sources 14 are evenly distributed along the circumferential direction of the inner wall of the hollow cylindrical element 5. It is further shown that optical axes of all imaging units 7 as well as illumination directions of the light sources 14 intersect in a common point located on the central axis 8 of the imaging section 6 which is collinear to the central longitudinal axis of the funnel 4 and the central longitudinal axis of the hollow cylindrical element 5.

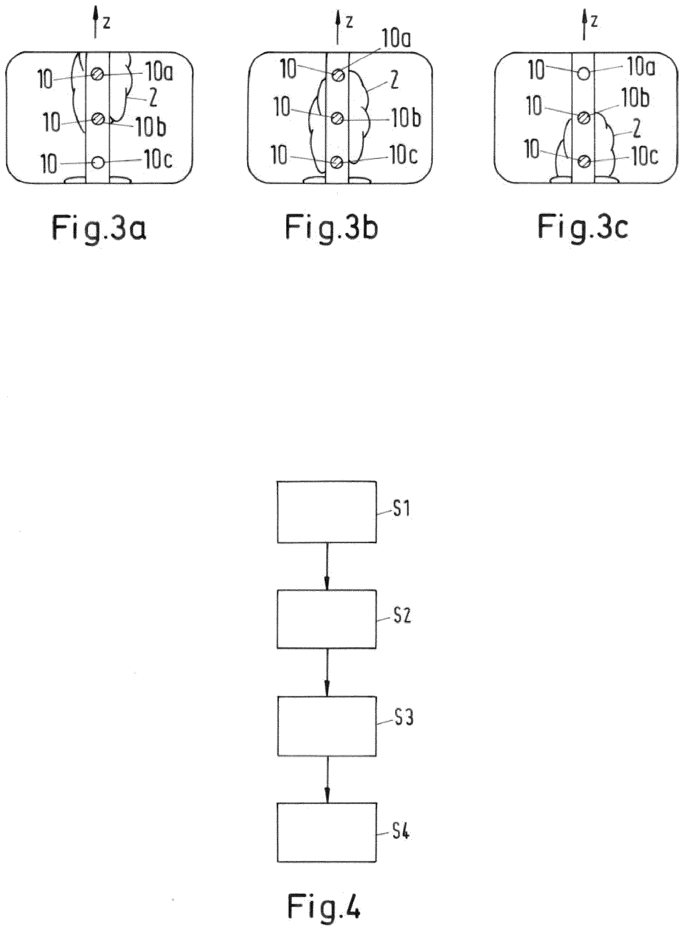

Fig. 3a shows a schematic arrangement of position detection units 10 with a textile 2 in a first position along the vertical axis. The position detection units 10 are provided by object detecting units which detect the presence of an object, namely the textile 2, in their respective detection zone. Crosshatched areas represent position detection units 10 which detect the presence of the textile 2.

In Fig. 3a, the position of the textile 2 along the vertical direction is higher than the position of the textile 2 shown in Fig. 3b, wherein this position is again higher than the position of the textile 2 shown in Fig. 3c. The positions of the textile 2 shown in these figures 3a, 3b, 3c are sequentially taken by the textile 2 during a free fall through the imaging section 6 (see figure 1). In the first position indicated in Fig. 3a, the presence of the textile 2 is detected by a first position detection unit 10a and a second position detection unit 10b. In the second position indicated in Fig. 3b, the presence of the textile 2 is detected by the first position detection unit 10a, the second position detection unit 10b and a third position detection unit 10c. In the third position indicated in Fig. 3c, the presence of the textile 2 is detected by the second position detection unit 10b and the third position detection unit 10c.

It is shown that the first position detection unit 10a is arranged above the second position detection unit 10b which is again arranged above the third position detection unit 10c along the vertical direction.

Each of the positions of the textile 2 shown in the figures 3a, 3b, 3c can be detected based on the output signals of each of the position detection unit 10a, 10b, 10c, wherein an output signal can e.g. be generated if the respective position detection unit 10a, 10b, 10c detects an object. No output signal can e.g. be generated if the respective position detection unit 10a, 10b, 10c does not detect an object. The output signal(s) can be used to control the image acquisition. This allows to perform a position-dependent acquisition of images of the textile 2.

Since the falling speed of deformable textiles 2 is variable due to the continuously changing shape of the textile 2, the special arrangement of the position detection units 10 with an underlying logic allows to be able to trigger the image acquisition by the image detection units 7 correctly in time. Further, the activation of light sources 14 can also be triggered correctly in time. The position detection units 10 are positioned on a vertical straight line parallel to the fall axis of the textile 2, so that the timing of the image acquisition is determined with the coverage of one or more sensors in order to record certain parts of the textile 2 (and not an empty housing if the textile 2 moved too fast). As sensory technique for the position detection units 10, photoelectric barriers using for example infrared or (laser-) light of other wavelength can be used. Also, ultrasonic sensors or mechanical switched can be used.

Fig. 4 shows a schematic flow diagram of a method for the analysis of at least one textile 2 (see Fig. 1). In a first step S1, a transport of a textile 2 through a supply section into an imaging section 6 is initiated. In a second step S2, a position of the textile 2 in the supply section and/or in the imaging section 6 is detected. In a third step S3 at least one image of the at least one textile 2 in the imaging section 6 is generated if the detected position matches a predetermined position, wherein the image generation is controlled based on the detected position. It is possible that the sequence of the second and the third step S2, S3 is repeated, in particular to take images at different positions of the textile 2. In a fourth step S4, at least one textile characteristic and/or at least defect and/or at least one defect characteristic is determined based on the at least one image. In a fifth step (not shown), the textile 2 can be sorted based on the textile characteristic and/or at least defect and/or at least one defect characteristic.

It is further possible that in the third step S3, at least one light source 14 is activated if the detected position matches a predetermined position, e.g. before the image is generated.

After the images of the textile 2 have been made, they are examined in parallel by an evaluation unit 9 (see Fig. 1) for determining e.g. the type of the textile 2 and any defects. The type distinction is made so that textiles 2 of a type that e.g. does not belong to the currently examined batch of products, can be treated separately. This is useful, for example, when different types of a textile 2 have different evaluation metrics or when it can happen that textiles 2 of a different type are in the set of textiles 2 that are to be sorted out. A distinction can be made here, for example, based on clothing type, qualities, weave and pattern. To differentiate between the different types of clothing of a textile 2, the following steps can be taken:
A) The color pattern areas are first defined which correspond to the possible textile types. Then the image of the textile 2 is segmented with respect to these different color ranges to determine what type it is.
B) A supervised or an unsupervised neural network is used to classify images and to assign the imaged textile 2 to a certain type of textile 2.

To differentiate two and one-tone colored types of textiles 2 from each other, the following method can be used: The color of each group of textiles is defined in the Hue, Saturation, Value (HSV) spectra by making a sample image in the described recording setup. Then, a digital image-processing tool is used to define the color values based on that image. These values can be extended by a predefined tolerance value. The method of alpha-keying method can then be used by the evaluation unit 9 to segment the defined color areas in the image of the falling textile 2. Other methods can be used as well. The number of pixels can then be counted for each segmented group of color. The correspondence to a certain group of one or two- or multi-tone color textiles 2 is then achieved by using the majority vote (the most pixel found for one color, that color it is). In other words, a predetermined relation between the number of pixels per segmented group of colors and the colorization of the textile 2 can be used in order to determine the colorization, i.e. one or more colors of the textile 2.

At the same time, the textile 2 can be examined for potential defects, e.g. also using a neural network. It is e.g. possible to localize textile defects such as stains, holes, tears, rust and many more, as well as to determine the spatial size of these defects. For this purpose, a RPN (Regional Proposal Network) can be used to propose interesting regions in the image and a RCNN (Region Based Convolutional Neural Network) to classify them as belonging to a certain type or background.

It is further possible to determine the size of a defect despite the complex three-dimensional alignment of the textiles. Depth information can e.g. be extracted from the images simultaneously to the determination of the defects. It is e.g. possible to use two imaging units 7 which provide a stereo camera setup by which the depth information can be determined. It is, however, also possible to extract depth information with a neural network using only an single image and then use the depth information for more accurate calculation of the defect size. It is further possible to use a structured light-based process in order to determine the depth information.

In order to localize and classify textile defects such as stains, holes, tears, rust and many more, as well as to determine the size of these defects neural networks can be used. These neural networks can be either trained in a supervised way or in an unsupervised way. The number of layers and neurons can depend upon on the complexity of the textiles 2. Annotated sample images can be captured and used in the case of using a supervised training method.

The neural network can e.g. be trained by providing it with numerous samples of stereo photo pairs of textiles 2, thereby enabling it to learn how to extract disparity maps from single images. In other words, a neural network can be used to determine a disparity map from a single image.

The disparity map, which provides a depth information, can then be used to calculate the actual size of localized defects more accurately by exploiting three-dimensional (3D) geometry. Different methods can be utilized for that task, resulting in varying degrees of improvement:
A. Determining a mapping of a disparity map value and actual distance to the imaging unit 7. This can easily be achieved by taking images of objects at a specified distance to the imaging unit 7 and then computing the corresponding disparity values. Having identified the disparity map, e.g. by a neural network, for an image of a textile 2, this allows to determine the actual distance of the textile 2 from the imaging unit 7 and further allows to determine the 3D geometry of the textile 2. Then, an area calculation known to the skilled person can be used to compute the defect size.
B. Determining the defect's angle to the image axis (the one going in/out of the image). The higher the angle, the larger the actual defect size is, thus the defect size can be approximated using that angle, computed through trigonometry. The defect's angle can be the angle between two lines which intersect in a common reference point, wherein the lines each intersect one of the image points of the defect having the largest distance from one another in the image. The common reference point can e.g. be the focal point.
C. Determining an average disparity value for a reference point of the imaging unit 7 and then scaling the defect size according to the deviation of a disparity value to the average disparity value.
D. Comparing average disparity values of a defect at both the left and right and the top and bottom of a patch in order to determine scaling vectors. This results in one horizontal and one vertical vector, corresponding to the scaling in both dimensions for different patches. The vector size is then the factor used to scale the located defect in vector direction.

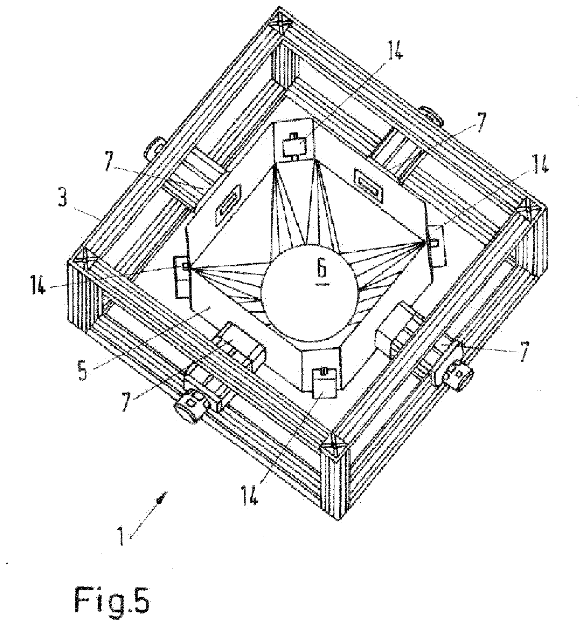

Fig. 5 shows a schematic perspective view of a cross section through a device 1 for the analysis and sorting of at least one textile 2. The device 1 comprises a frame 3 and a hollow cylindrical element 5 are mounted to the frame 3. Not shown is a funnel 4 and vertical direction. As in the embodiment shown in fig. 1, the textile 2 can be supplied to an imaging section 6 which is arranged in the inner volume of the hollow cylindrical element 5. The cylindrical element 5 has an octagonal shaped footprint an eight different side wall sections in an angled arrangement enclosing the imaging section 6.

Further shown are imaging units 7 mounted at different positions on the inner wall of the hollow cylindrical element 5, in particular to/on different side wall sections. Optical axes of said imaging units 7 are oriented towards a central axis of the imaging section 6.

Further shown are light sources 14 which are also mounted at different positions on the inner wall, in particular to/on different side wall sections. In particular, only one of the element light source 14, imaging unit 7 is mounted to one side wall section. Illumination directions of said light sources 14 are also oriented towards said central axis of the imaging section 6.

It is further shown that the imaging units 7 are equiangularly arranged along an octagonal path around the central axis which is parallel or collinear to the transport trajectory of the textile 2, wherein the octagonal path extends along the inner surface of the hollow cylindrical element 5 and is arranged in a plane which is oriented perpendicular to the central axis in the point of intersection of the plane and the central axis 8. An angle between two adjacent or neighbouring imaging units 7 along the octagonal path is equal to 90°. Correspondingly, the light sources 14 are arranged equiangularly along said octagonal path. Further, the angular positions of the imaging units 7 are different from the angular positions of the light sources 14 in a common reference polar or cylindrical coordinate system around the centre of the octagonal path. Not shown is an evaluation and control unit 9 which can be attached to the frame 3.

## Claims

1. A device for the analysis of at least one textile (2), wherein the device (1) comprises at least one control unit (9), at least one imaging unit (7) and at least one evaluation unit (9), wherein the device (1) further has or provides at least one supply section for supplying the textile (2) into an imaging section (6), wherein at least one image of the textile (2) is generable by means of the imaging unit (7) if the textile (2) is in the imaging section (6), wherein at least one textile characteristic and/or at least defect and/or at least one defect characteristic is determinable by means of the evaluation unit (9) based on the at least one image, wherein the device (1) comprises at least one position detection unit (10) for detecting a position of the textile (2) in the supply section and/or in the imaging section (6), wherein the at least one imaging unit (7) for generating at least one image of the textile is not part of the position detection unit (10), **characterized in that** the device (1) is configured such that the image generation by the at least one imaging unit (7) is controlled by means of the control unit (9) based on the detected position, wherein the time point of the image generation is controlled based on the detected position.

2. The device according to claim 1, **characterized in that** the device (1) is designed such that a transport direction of the at least one textile (2) through the imaging section (6) is fully or at least partially parallel to a direction of the gravitational force.

3. The device according to one of the preceding claims, **characterized in that** the device (1) further comprises at least one light source for illuminating the imaging section (6) or a part thereof.

4. The device according to one of the preceding claims, **characterized in that** the device (1) comprises multiple imaging units (7) for imaging the textile (2) in the imaging section (6) from different positions and/or with different orientations.

5. The device according to one of the preceding claims, **characterized in that** the device (1) comprises multiple position detection units (10) for detecting different positions of the textile (2) in the supply section and/or in the imaging section (6).

6. The device according to claim 5, **characterized in that** the multiple position detection units (10) are arranged such that different positions of the textile (2) along the transport trajectory are detectable.

7. The device according to one of the preceding claims, **characterized in that** a position detection unit (10) comprises an optical sensor, an ultrasonic sensor or a mechanical sensor.

8. The device according to one of the preceding claims, **characterized in that** a textile characteristic is a color, a color pattern, a type of textile, a garment or a thread system.

9. The device according to one of the preceding claims, **characterized in that** a defect is a cut, a hole, a stain, the presence of rust or an opened seam.

10. The device according to one of the preceding claims, **characterized in that** a characteristic of a defect is a size of the defect.

11. The device according to one of the preceding claims, **characterized in that** a depth information of a defect is determined, wherein the size of the defect is determined based on the depth information.

12. The device according to claim 11, **characterized in that** the depth information is determined based on a single image of one imaging unit.

13. The device according to one of the preceding claims, **characterized in that** at least one textile characteristic and/or at least one defect and/or at least one defect characteristic and/or the depth information is determinable by using a Neural Network.

14. The device according to one of the preceding claims, **characterized in that** the device is part of a textile sorting device.

15. A method for the analysis of at least one textile (2), wherein the at least one textile (2) is transported through a supply section into an imaging section (6), wherein a position of the at least one textile (2) in the supply section and/or in the imaging section (6) is detected by at least one position detection unit (10), wherein at least one image of the at least one textile (2) in the imaging section (6) is generated, wherein at least one textile characteristic and/or at least defect and/or at least one defect characteristic is determined based on the at least one image, wherein said at least one imaging unit (7) for generating at least one image of the textile is not part of the position detection unit (10) for detecting the position,
**characterized in that**
the image generation by said at least one imaging unit (7) is controlled by means of a control unit (9) based on the detected position, wherein the time point of the image generation is controlled based on the detected position.

## Patentansprüche

1. Vorrichtung zur Analyse mindestens eines Textils (2), wobei die Vorrichtung (1) mindestens eine Steuereinheit (9), mindestens eine Abbildungseinheit (7) und mindestens eine Auswerteeinheit (9) umfasst, wobei die Vorrichtung (1) ferner mindestens einen Zuführabschnitt zum Zuführen des Textils (2) in einen Abbildungsabschnitt (6) aufweist oder bereitstellt, wobei mittels der Abbildungseinheit (7) mindestens ein Abbild des Textils (2) erzeugbar ist, wenn sich das Textil (2) in dem Abbildungsabschnitt (6) befindet, wobei mittels der Auswerteeinheit (9) anhand des mindestens einen Abbilds mindestens ein Textilmerkmal und/oder mindestens ein Fehler und/oder mindestens ein Fehlermerkmal bestimmbar ist, wobei die Vorrichtung (1) mindestens eine Positionserfassungseinheit (10) zum Erfassen einer Position des Textils (2) in dem Zuführabschnitt und/oder in dem Abbildungsabschnitt (6) aufweist, wobei die mindestens eine Abbildungseinheit (7) zum Erzeugen mindestens eines Abbilds des Textils nicht Teil der Positionserfassungseinheit (10) ist, **dadurch gekennzeichnet, dass** die Vorrichtung (1) derart ausgestaltet ist, dass die Bilderzeugung durch die mindestens eine Abbildungseinheit (7) mittels der Steuereinheit (9) basierend auf der erfassten Position gesteuert wird, wobei der Zeitpunkt der Bilderzeugung basierend auf der erfassten Position gesteuert wird.

2. Vorrichtung nach Anspruch 1, **dadurch gekennzeichnet, dass** die Vorrichtung (1) so ausgebildet ist, dass eine Transportrichtung des mindestens einen Textils (2) durch den Abbildungsabschnitt (6) ganz oder zumindest teilweise parallel zu einer Richtung der Gravitationskraft verläuft.

3. Vorrichtung nach einem der vorhergehenden Ansprüche, **dadurch gekennzeichnet, dass** die Vorrichtung (1) ferner mindestens eine Lichtquelle zum Beleuchten des Abbildungsabschnitts (6) oder eines Teils davon aufweist.

4. Vorrichtung nach einem der vorangehenden Ansprüche, **dadurch gekennzeichnet, dass** die Vorrichtung (1) mehrere Abbildungseinheiten (7) zum Abbilden des Textils (2) in dem Abbildungsabschnitt (6) aus verschiedenen Positionen und/oder mit verschiedenen Orientierungen umfasst.

5. Vorrichtung nach einem der vorhergehenden Ansprüche, **dadurch gekennzeichnet, dass** die Vorrichtung (1) mehrere Positionserfassungseinheiten (10) zum Erfassen unterschiedlicher Positionen des Textils (2) in dem Zuführabschnitt und/oder in dem Abbildungsabschnitt (6) aufweist.

6. Vorrichtung nach Anspruch 5, **dadurch gekennzeichnet, dass** die mehreren Positionserfassungseinheiten (10) derart angeordnet sind, dass unterschiedliche Positionen des Textils (2) entlang der Transportbahn erfassbar sind.

7. Vorrichtung nach einem der vorhergehenden Ansprüche, **dadurch gekennzeichnet, dass** eine Positionserfassungseinheit (10) einen optischen Sensor, einen Ultraschallsensor oder einen mechanischen Sensor umfasst.

8. Vorrichtung nach einem der vorhergehenden Ansprüche, **dadurch gekennzeichnet, dass** ein Textilmerkmal eine Farbe, ein Farbmuster, eine Textilart, ein Kleidungsstück oder ein Fadensystem ist.

9. Vorrichtung nach einem der vorhergehenden Ansprüche, **dadurch gekennzeichnet, dass** ein Fehler ein Schnitt, ein Loch, ein Fleck, das Vorhandensein von Rost oder eine geöffnete Naht ist.

10. Vorrichtung nach einem der vorangehenden Ansprüche, **dadurch gekennzeichnet, dass** ein Merkmal eines Fehlers eine Größe des Fehlers ist.

11. Vorrichtung nach einem der vorhergehenden Ansprüche, **dadurch gekennzeichnet, dass** eine Tiefeninformation eines Defekts ermittelt wird, wobei die Größe des Defekts auf der Basis der Tiefeninformation ermittelt wird.

12. Vorrichtung nach Anspruch 11, **dadurch gekennzeichnet, dass** die Tiefeninformation auf der Basis eines einzelnen Abbilds einer Abbildungseinheit ermittelt wird.

13. Vorrichtung nach einem der vorhergehenden Ansprüche, **dadurch gekennzeichnet, dass** mindestens ein Textilmerkmal und/oder mindestens ein Fehler und/oder mindestens ein Fehlermerkmal und/oder die Tiefeninformation unter Verwendung eines Neuronalen Netzes bestimmbar ist.

14. Vorrichtung nach einem der vorhergehenden Ansprüche, **dadurch gekennzeichnet, dass** die Vorrichtung Teil einer Textilsortiereinrichtung ist.

15. Verfahren zur Analyse mindestens eines Textils (2), wobei das mindestens eine Textil (2) durch einen Zuführabschnitt in einen Abbildungsabschnitt (6) transportiert wird, wobei eine Position des mindestens einen Textils (2) in dem Zuführabschnitt und/oder in den Abbildungsabschnitt (6) durch mindestens eine Positionserfassungseinheit (10) erfasst wird, wobei mindestens ein Abbild des mindestens einen Textils (2) in dem Abbildungsabschnitt (6) erzeugt wird, wobei mindestens ein Textilmerkmal und/oder mindestens ein Fehler und/oder mindestens ein Fehlermerkmal auf der Grundlage des mindestens einen Abbilds bestimmt wird, wobei die mindestens eine Abbildungseinheit (7) zum Erzeugen mindestens eines Abbilds des Textils nicht Teil der Positionserfassungseinheit (10) zum Erfassen der Position ist, **dadurch gekennzeichnet, dass** die Bilderzeugung durch die mindestens eine Abbildungseinheit (7) mittels einer Steuereinheit (9) auf der Grundlage der erfassten Position gesteuert wird, wobei der Zeitpunkt der Bilderzeugung auf der Grundlage der erfassten Position gesteuert wird.

## Revendications

1. Dispositif d'analyse d'au moins un textile (2), dans lequel le dispositif (1) comprend au moins une unité de commande (9), au moins une unité d'imagerie (7) et au moins une unité d'évaluation (9), dans lequel le dispositif (1) possède ou fournit en outre au moins une section d'alimentation pour alimenter le textile (2) dans une section d'imagerie (6), dans lequel au moins une image du textile (2) peut être générée au moyen de l'unité d'imagerie (7) si le textile (2) se trouve dans la section d'imagerie (6), dans lequel au moins une caractéristique du textile et/ou au moins un défaut et/ou au moins une caractéristique du défaut peut être déterminée au moyen de l'unité d'évaluation (9) sur la base d'au moins une image, dans lequel le dispositif (1) comprend au moins une unité de détection de position (10) pour détecter une position du textile (2) dans la section d'alimentation et/ou dans la section d'imagerie (6), dans lequel au moins une unité d'imagerie (7) pour générer au moins une image du textile ne fait pas partie de l'unité de détection de position (10), **caractérisé en ce que** le dispositif (1) est configuré de telle sorte que la génération d'image par l'au moins une unité d'imagerie (7) est commandée au moyen de l'unité de commande (9) sur la base de la position détectée, dans lequel le moment de la génération d'image est commandé sur la base de la position détectée.

2. Le dispositif selon la revendication 1, **caractérisé par le fait que** le dispositif (1) est conçu de telle sorte qu'une direction de transport de l'au moins un textile (2) à travers la section d'imagerie (6) est entièrement ou au moins partiellement parallèle à une direction de la force gravitationnelle.

3. Le dispositif selon l'une des revendications précédentes, **caractérisé par le fait que** le dispositif (1) comprend en outre au moins une source lumineuse pour éclairer la section d'imagerie (6) ou une partie de celle-ci.

4. Le dispositif selon l'une des revendications précédentes, **caractérisé en ce que** le dispositif (1) comprend plusieurs unités d'imagerie (7) pour l'imagerie du textile (2) dans la section d'imagerie (6) à partir de différentes positions et/ou avec différentes orientations.

5. Le dispositif selon l'une des revendications précédentes, **caractérisé par le fait que** le dispositif (1) comprend plusieurs unités de détection de position (10) pour détecter différentes positions du textile (2) dans la section d'alimentation et/ou dans la section d'imagerie (6).

6. Le dispositif selon la revendication 5, **caractérisé en ce que** les multiples unités de détection de position (10) sont disposées de manière à détecter différentes positions du textile (2) le long de la trajectoire de transport.

7. Le dispositif selon l'une des revendications précédentes, **caractérisé en ce qu'**une unité de détection de position (10) comprend un capteur optique, un capteur à ultrasons ou un capteur mécanique.

8. Le dispositif selon l'une des revendications précédentes, **caractérisé en ce qu'**une caractéristique textile est une couleur, un motif de couleur, un type de textile, un vêtement ou un système de fils.

9. Le dispositif selon l'une des revendications précédentes, **caractérisé en ce qu'**un défaut est une coupure, un trou, une tache, la présence de rouille ou une couture ouverte.

10. Dispositif selon l'une des revendications précédentes, **caractérisé en ce qu'**une caractéristique d'un défaut est une taille du défaut.

11. Le dispositif selon l'une des revendications précédentes, **caractérisé en ce qu'**une information sur la profondeur d'un défaut est déterminée, la taille du défaut étant déterminée sur la base de l'information sur la profondeur.

12. Le dispositif selon la revendication 11, **caractérisé en ce que** l'information de profondeur est déterminée sur la base d'une seule image d'une unité d'imagerie.

13. Le dispositif selon l'une des revendications précédentes, **caractérisé par le fait qu'**au moins une caractéristique textile et/ou au moins un défaut et/ou au moins une caractéristique de défaut et/ou l'information sur la profondeur peut être déterminée à l'aide d'un réseau neuronal.

14. Le dispositif selon l'une des revendications précédentes, **caractérisé en ce que** le dispositif fait partie d'un dispositif de triage de textiles.

15. Méthode d'analyse d'au moins un textile (2), dans laquelle l'au moins un textile (2) est transporté à travers une section d'alimentation dans une section d'imagerie (6), dans laquelle une position de l'au moins un textile (2) dans la section d'alimentation et/ou dans la section d'imagerie (6) est détectée par au moins une unité de détection de position (10), dans laquelle au moins une image du textile (2) dans la section d'imagerie (6) est générée, dans laquelle au moins une caractéristique textile et/ou au moins un défaut et/ou au moins une caractéristique de défaut est déterminée sur la base d'au moins une image, dans laquelle ladite au moins une unité d'imagerie (7) pour générer au moins une image du textile ne fait pas partie de l'unité de détection de position (10) pour détecter la position, **caractérisé par le fait que** la génération d'images par ladite au moins une unité d'imagerie (7) est commandée au moyen d'une unité de commande (9) en fonction de la position détectée, le moment de la génération d'images étant commandé en fonction de la position détectée.
